# EUROPÄISCHE PATENTSCHRIFT

(11) **EP 3 431 227 B1**
(45) Veröffentlichungstag und Bekanntmachung des Hinweises auf die Patenterteilung: **30.12.2020**
(21) Anmeldenummer: 18175756.8
(22) Anmeldetag: 04.06.2018
(51) Int. Cl.: B25F 5/02, B23Q 11/00, F16L 37/00

(54) **AN EINE ABSAUGVORRICHTUNG ANSCHLIESSBARE HANDWERKZEUGMASCHINE**
HAND-HELD MACHINE TOOL CONNECTED TO A SUCTION DEVICE
MACHINE-OUTIL À MAIN POUVANT ÊTRE RACCORDÉE À UN DISPOSITIF D'ASPIRATION

(30) Priorität: 17.07.2017 DE 202017003721 U
(43) Veröffentlichungstag der Anmeldung: 23.01.2019
(73) Patentinhaber: Riß, Tobias, 86444 Affing-Mühlhausen (DE)
(72) Erfinder: Riß, Tobias, 86444 Affing-Mühlhausen (DE)
(74) Vertreter: Charrier Rapp & Liebau

(56) Entgegenhaltungen:
- DE-U1-202010 001 422
- US-A- 3 181 895
- US-A1- 2014 041 142
- US-A1- 2015 360 298
- US-A1- 2016 327 195
- US-B1- 7 793 987

## Beschreibung

Die Erfindung betrifft die Verwendung einer Schnellkupplung aus magnetischem Material bei einem Anschlussstück zum Anschließen an eine Handwerkzeugmaschine zu deren Anschließen an eine Absaugvorrichtung zum Absaugen von Staub und Partikeln.

Handwerkzeugmaschinen, insbesondere Handbohrmaschinen, mit Staubabsaugung sind bekannt. Aus der DE 196 47 575 A1 ist eine Bohreinrichtung bekannt, in der die Staubabsaugung vollständig im Inneren integriert ist. Es wird eine Bohrstaubabsaugung beschrieben, bei der der Bohrstaub durch eine den Bohrer antreibende Hohlwelle und einen Innenraum des Gehäuses hindurch abgesaugt wird. Das Prinzip dieser Bohrmaschine besteht darin, dass die den Bohrer antreibende, mit ein oder mehreren relativ großen Öffnungen in ihrer Wandung versehene Hohlwelle Teil der Antriebswelle der Antriebsmaschine oder mit ihr kuppelbar ist, dass ein die Außenwandung der Hohlwelle im Bereich dieser Öffnungen umschließende, mit Lagern für die Hohlwelle und mit Durchtrittsöffnungen für Luft und/oder Wasser versehenes Gehäuse vorgesehen ist, dass das Gehäuse fest mit dem Körper der Antriebsmaschine verbunden oder verbindbar ist, dass das Gehäuse an seiner Außenseite von einem auf der Außenwandung gelagerten und seitlich abgedichteten Saugring umgeben ist, dessen Innenraum den Gehäuseöffnungen zugeordnet ist und mittels einer Bohrung oder Öffnung in der Saugringwandung so mit der Saugeinrichtung verbunden oder verbindbar ist, das Bohrstaub oder kleiner Bohrpartikel aus der Hohlwelle durch die Innenräume von Gehäuse und Saugring hindurch von der Saugeinrichtung ansaugbar sind.

Die DE 10 2004 045 625 A1 offenbart eine Staubabsaugvorrichtung für eine Handwerkzeugmaschine, bei der ein in einem Maschinengehäuse integriertes Kühlluftgebläse derart mit einem Sauggebläse gekoppelt ist, dass der Kühlluftstrom ein Turbinenrad antreibt, welches wiederum in Antriebsverbindung mit einem Lüfterrad steht. Der durch das Lüfterrad erzeugte Saugstrom führt durch einen Saugkanal von einer Saugglocke, die zum Überdecken der Werkzeugeinsatzstelle dient, zu einem Staubauffangbehälter. Die beschriebene Absaugvorrichtung benötigt somit keine eigene Energieversorgung und ist voll in das Werkzeug integriert.

Die DE 295 15 166 U1 offenbart eine Schlagbohrvorrichtung mit integrierter Staubabsaugung, wobei der Absaugkanal im Bohrschaft integriert ist und wobei die Bohrstaubsaugvorrichtung beispielsweise an einen Staubsauger angeschlossen werden kann.

In der DE 20 2007 010 514 U1 wird eine Handwerkzeugmaschine beschrieben, gemäß der ein senkrecht zur Längsachse der Handwerkzeugmaschine angebrachter Zusatzhandgriff eine Anschlusseinrichtung für eine Saugeinrichtung aufweist. Eine Saugeinrichtung erzeugt einen Saugstrom durch einen Hohlraum in dem Zusatzhandgriff; der Saugstrom wird mit einer Einrichtung zur Abdeckung der Werkzeugansatzstelle zugeführt, um dort durch einen Bearbeitungsvorgang anfallende Partikel aufzunehmen. Der Einsatz des Zusatzhandgriffs zum Absaugen behindert den Benutzer der Handwerkzeugmaschine in seiner Bewegungsfreiheit.

Die DE 295 12 804 U1 beschreibt eine Vorrichtung zum Auffangen von Bohrstaub, die aus ineinander schiebbaren Muffen besteht, die das Bohrfutter bzw. den Bohrer umschließen und radial verteilte Lufteinlassöffnungen aufweisen. Eine Muffe ist seitlich mit einem Absaugstutzen versehen, an den eine Absaugeinrichtung, bspw. ein Staubsauger angeschlossen werden kann.

Die Druckschriften DE 10 2006 031 507 A1, DE 10 2013 215 792 A1, DE 20 2010 006 755 U1, US 8,622,788 B2, US 3,511,322 A, WO 2010/120322 A1, WO 2012/141702 A1, JP 2009-12395 A und JP 2015-223948 A zeigen darüber hinaus Handwerkzeugmaschinen bzw. Absaugvorrichtungen für Handwerkzeugmaschinen, welche eine Schnellkupplung aufweisen.

Die US 2015/0360298 A1 zeigt eine Ständerbohrmaschine mit einer Absaugeinrichtung zum Absaugen von Staub und Partikeln, wobei an einem Gehäuseteil der Ständerbohrmaschine ein Anschlussstück mit dieser verbindbar ist, welches einen seitlich der Längsachse der Bohrmaschine angeordneten Adapter mit einer Öffnung zur Verbindung mit der Absaugvorrichtung aufweist, welche über eine Kupplung an den Adapter anschließbar ist. Eine besonders schnelle und problemlose Kupplung ist hier nicht notwendig, da bei einer Ständerbohrmaschine die Absaugvorrichtung immer angeschlossen bleiben kann.

Die US 2014/0041142 A1 hat eine Absaugvorrichtung zum Gegenstand, wobei ein Adapter an einen Schlauch anschließbar ist, und zwar über einen Bajonett- oder Schraubverbindung. Auch hier kommt es nicht darauf an, dass eine besonders schnelle Kopplung und Entkopplung stattfindet. Ein beschriebener Anwendungsfall der Apparatur bezieht sich auf ein Staubsaugersystem.

Die US 2016/0327195 A1 zeigt eine Schnellkupplung eines Schlauches, welche auf einer Magnetverbindung beruht, wobei der Schlauch zur Be- oder Entlüftung eines Wäschetrockners dient. Eine ähnliche magnetische Schnellkupplung ist Gegenstand der US 7,793,987 B1 in der Anwendung auf Rohrleitungen für die Gasverteilung. Auch die US 3,181,895 hat eine magnetische Schnellkupplung zum Gegenstand, hier in der Anwendung auf pneumatische Steuerungen. Die in der Druckschrift beschriebene Anordnung lässt keine Relativdrehung der beiden Teile der Steckverbindung zu, da sich der Nordpol und der Südpol bei einer Drehung abstoßen würden. Eine Schnellverbindung ist somit nicht möglich. Schließlich ist Gegenstand der DE 20 2010 001 422 U1 eine magnetische fluidische Steckverbindung, deren Anwendung auf Schläuche jedoch nicht dargelegt ist, sondern bei der es um das Einstecken einer Rohrleitung in ein festes Steckbuchsenteil geht.

Die im Stand der Technik beschriebenen Absaugvorrichtungen weisen, soweit sie sich auf Werkzeugmaschinen beziehen, den Nachteil auf, dass sie nur kompliziert und umständlich von der Handbohrmaschine zu trennen bzw. an diese anzubringen sind. Eine Vielzahl weiterer magnetischer Kupplungen eignet sich per se nicht zur Anbringung an einer mobilen Handbohrmaschine oder Werkzeugmaschine, da es an der notwendigen Flexibilität und der Möglichkeit des schnellen Wechselns fehlt.

Es besteht daher die Aufgabe, ein Anschlussstück zum Anschließen an eine Handwerkzeugmaschine so weiterzubilden, dass eine Absaugvorrichtung schnell und einfach anflanschbar und wiederabnehmbar ist.

Gelöst wird diese Aufgabe durch die Verwendung einer an sich bekannten Schnellkupplung bei einem Anschlussstück zum Anschließen an eine Werkzeugmaschine gemäß Anspruch 1. Vorteilhafte Ausgestaltungen sind den Unteransprüchen entnehmbar.

In Sinne der Erfindung dient die Handwerkzeugmaschine beispielsweise zum Senken, d. h., zur Herstellung von senkrecht zur Drehachse liegenden Profil- oder Kegelflächen, mittels eines Anschlag- oder eines Mantelsenkers, oder zum Bohren mittels eines Bohrers, insbesondere auch eines Spiralbohrers, oder zur Bearbeitung mittels einer Reibahle.

Von Vorteil ist es insbesondere, wenn die Absaugvorrichtung einen Schlauch, insbesondere einen elastisch auseinanderziehbaren Schlauch, oder ein Rohr, insbesondere ein teleskopierbares Rohr, umfasst, an den bzw. an das die Schnellkupplung anschließbar ist. Als Absaugvorrichtung kann ein handelsüblicher Staubsauger verwendet werden.

Wenn die Absaugvorrichtung, insbesondere ein an ihr angeschlossener Schlauch oder ein an ihr angeschlossenes Rohr zur Verbindung mit Dem Anschlussstück, mittels eines Verbindungsstücks gegenüber dem Körper der Handwerkzeugmaschine fixiert wird, lassen sich Staub und andere Partikel wie Bohrklein leicht von der Bearbeitungsstelle entfernen. Wenn die Absaugvorrichtung unter einem Winkel von 90°, unter einem stumpfen Winkel oder einem spitzen Winkel gegenüber der Arbeitsrichtung der Handwerkzeugmaschine angeordnet ist, werden die beim Bearbeitungsvorgang entstandenen Partikel effizient entfernt, ohne dass der Bediener der Handwerkzeugmaschine hierdurch behindert oder in seiner Tätigkeit eingeschränkt wird.

Vorzugsweise sind nach einer Ausgestaltung der Erfindung zwischen dem Anschlussstück und dem vorderen Gehäuseteil der Handwerkzeugmaschine ein Faltenbalg und/oder ein federndes Element als Verbindungselement vorgesehen.

Erfindungsgemäß wird die Schnellkupplung durch magnetische Elemente gebildet, nämlich durch sich anziehende Ringe aus einem magnetischen Material, die jeweils in den Anschlusselementen eingebettet sind, die die Schnellkupplung bilden. Von Vorteil ist es auch, wenn in unmittelbarer Nähe zu der Schnellkupplung ein Kugelgelenk angebracht ist, um eine hohe Flexibilität in der Verbindung zu der Absaugvorrichtung zu gewährleisten.

Es wird auch dargestellt, ein Anschlussstück zum Anschließen an eine Handwerkzeugmaschine, wie sie oben beschrieben wurde, wobei das Anschlussstück einen seitlich der Längsachse der Handwerkzeugmaschine angeordneten Adapter mit einer Öffnung zur Verbindung mit einer Absaugvorrichtung aufweist.

Der Adapter des Anschlussstücks weist eine Schnellkupplung auf, über die die Absaugvorrichtung an den Adapter anschließbar ist.

Erfindungsgemäß ist vorgesehen, dass die Schnellkupplung einen die Saugluftdurchführung umschließenden ersten Ring aus einem dauermagnetischen Material, insbesondere aus einem magnetisierten Stahl oder aus einem Kunststoff mit permanentmagnetischen Eigenschaften umfasst, wobei die Absaugvorrichtung mit einem dem ersten Ring entsprechenden zweiten Ring ausgestattet ist, der durch magnetische Anziehung im mit dem Anschlussstück verbundenen Zustand fest und abdichtend mit dem ersten Ring des Adapters verbunden ist.

Mit Vorteil lässt sich die Schnellkupplung durch einen Rastverschluss oder durch einen Bajonettverschluss ausbilden.

Um einen ausreichenden Spielraum für die Ausdehnung des Anschlussstücks in Richtung der Drehachse oder Längsachse des Handwerkzeugs zu schaffen, wird das Anschlussstück über wenigstens zwei teleskopartig miteinander bzw. mit dem Anschlussstück verbundene Muffen an die Handwerkzeugmaschine angesetzt, deren Länge sich jeweils nach dem Bedarf einstellen lässt.

Wenn der Adapter mit einem Kugelgelenk ausgestattet ist, lässt sich die Raumrichtung, in der die Absaugvorrichtung angeschlossen ist, in einem großen Bereich verändern.

Wenn das Anschlussstück auf der Seite, an der es auf eine Kontur des zu bearbeitenden Materials aufgesetzt wird, elastische Elemente aufweist, lässt es sich einfach und stabil auf der Kontur fixieren.

Vorzugsweise dienen zur Abstützung des Anschlussstücks auf der Kontur drei, insbesondere elastisch gelagerte Füßchen, insbesondere aus Gummi oder einem sonstigen elastischen Material. Auf einfache Weise lässt sich ein Anschlussstück nach einem 3D-Druckverfahren herstellen.

Nachstehend wird die Erfindung anhand von Ausführungsbeispielen unter Bezugnahme auf die beiliegenden Zeichnungen näher erläutert. Es zeigen:
- **Fig. 1**: Eine Handwerkzeugmaschine mit einem an ihrem vorderen Gehäuseteil aufgesetzten Anschlussstück, das seinerseits einen Adapter zur Verbindung mit einer Absaugvorrichtung aufweist, in perspektivischer Ansicht,

- **Fig. 2**: Das vordere Gehäuseteil und das Anschlussstück gemäß Fig. 1 in einer seitlichen Teilansicht,
- **Fig. 3**: Das vordere Gehäuseteil und das Anschlussstück gemäß Fig. 2 mit auseinandergenommenen Teilen,
- **Fig. 4**: Das Anschlussstück gemäß Fig. 3 in der Schnittansicht in Verbindung mit dem vorderen Gehäuseteil,
- **Fig. 5a-c**: Eine weitere Ausführungsform des Anschlussstücks in Verbindung mit dem vorderen Gehäuseteil,
- **Fig. 6a-c**: Eine Ausführungsform eines dreieckförmig ausgestalteten Anschlussstücks in Verbindung mit dem vorderen Gehäuseteil,
- **Fig. 7**: Eine Handwerkzeugmaschine in Verbindung mit einem beidseitig gegenüber Handwerkzeugmaschine befestigten Saugschlauch in einer perspektivischen Ansicht,
- **Fig. 7a, b**: Weitere Ansichten der Handwerkzeugmaschine in Verbindung mit einem Teil des Saugschlauchs, teilweise zerlegt, und
- **Fig. 7c**: Die Handwerkzeugmaschine mit Teilen des Saugschlauchs und des Anschlusses des Saugschlauchs an der Handwerkzeugmaschine in der Schnittansicht.

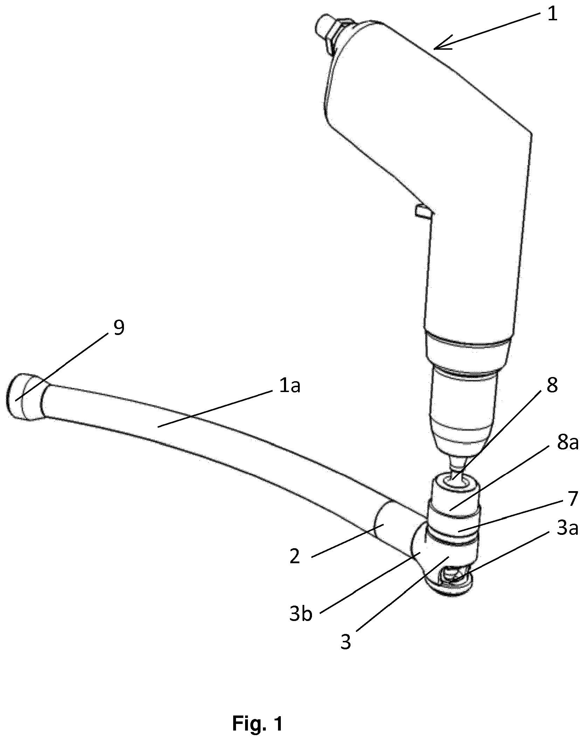

Eine Handwerkzeugmaschine 1 (Fig. 1) dient zum Absenken eines Senkers 8 in eine wenigstens im Wesentlichen, hier nicht dargestellte flächige Kontur eines Materialstücks.

Alternativ dient die Handwerkzeugmaschine 1 beispielsweise als Bohrmaschine, wenn sie mit einem Bohrer ausgerüstet wird. Auf eine Buchse 8a des Senkers 8 ist eine Hülse 7 aufgesetzt.

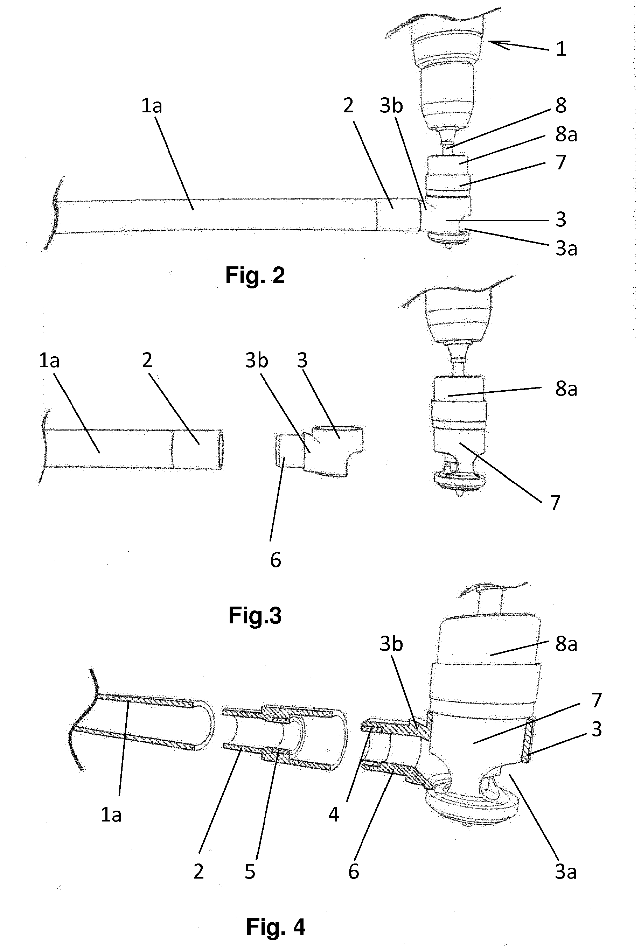

Auf diese ist ein Anschlussstück 3 aufgebracht, welches einerseits über einen Anschlussstutzen 3b und einen Saugschlauch 1a sowie einen Adapter 9 für einen Saugschlauch mit einem größeren Durchmesser mit einer (nicht dargestellten) Absaugvorrichtung verbunden ist und andererseits auf der dem Anschlussstutzen 3b gegenüberliegenden Seite mit einer seitlichen Öffnung 3a versehen ist, durch die Ansaugluft angesaugt wird, die zusammen mit den beim Senkvorgang entstehenden Partikeln durch den von der Absaugvorrichtung erzeugten Unterdruck abgesaugt wird. Der Anschlussstutzen 3b (siehe auch Fig. 2, Fig. 3) ist auf die Absaughülse aufgesteckt, verrastet, aufgeschraubt oder in sonstiger Weise mit ihr verbunden, insbesondere einteilig mit der Absaughülse ausgestaltet.

Der Anschlussstutzen 3b ist über ein Verbindungsstück 2 mit dem Saugschlauch 1a verbunden. Hierzu weist der Anschlussstutzen 3b ein männliches Anschlussstück 6 auf, auf das das Verbindungsstück 2 als weibliches Anschlussstück aufgeschoben ist. Der Anschlussstutzen 3b und das Verbindungsstück 2 bilden zusammen einen Adapter zur Herstellung einer Verbindung zwischen der Absaughülse bzw. dem Anschlussstück 3 und der Absaugvorrichtung.

Das Anschlussstück 6 weist auf seinem Innenumfang einen ersten Ring 4 (Fig. 4) aus einem magnetischen oder einem magnetisierbaren Material auf. Durch die magnetische Anziehungskraft eines zweiten Rings 5, der in dem Verbindungsstück 2 des Saugschlauchs 1a integriert ist, lässt sich der Saugschlauch 1a mit dem Anschlussstutzen 3b fest und abdichtend verbinden. Hilfsweise lässt sich zwischen den magnetischen Ringen 4 und 5 eine zusätzliche Gummidichtung vorsehen. Der Saugschlauch 1a und das Verbindungsstück 2 sind fest miteinander verbunden, beispielsweise verklebt.

Anstelle des Anschlussstutzens 3b lassen sich andere Anschlussstücke einsetzen, die unter einem senkrechten Winkel bzw. unter einem stumpfen Winkel zur Längsachse der Handwerkzeugmaschine 1 ausgerichtet sind. Auch diese Anschlussstutzen oder Adapter sind jeweils mit einem magnetischen ersten Ring 4 zur Bildung einer Schnellkupplung ausgestattet, so dass sie magnetisch mit dem zweiten Ring 5 des Verbindungsstücks 2 des Saugschlauchs 1a verbindbar sind.

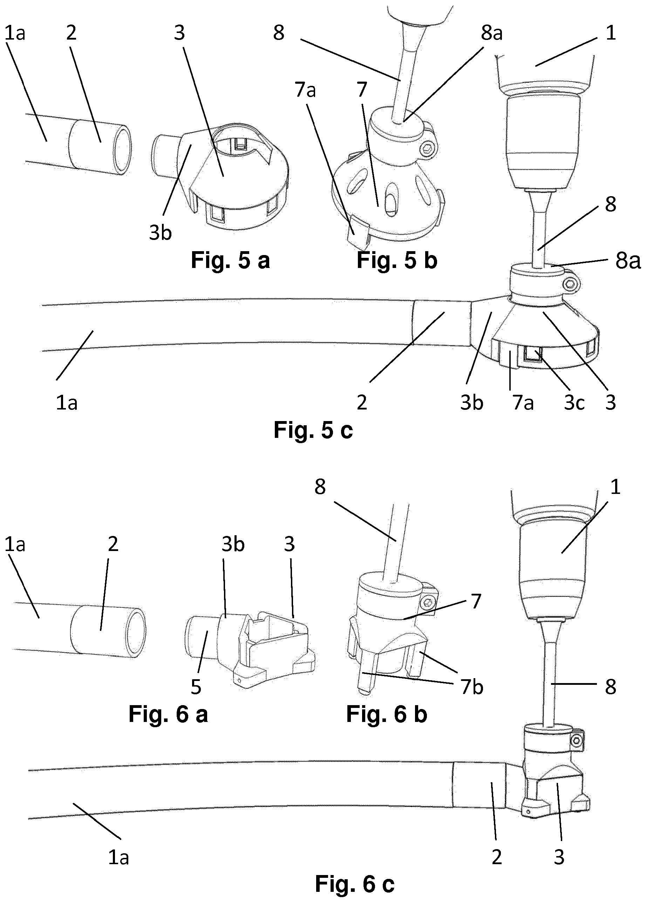

In einem anderen Ausführungsbeispiel hat eine Hülse 7 (Fig. 5b) in ihrem oberen, sich an die Buchse 8a anschließenden Bereich einen zylinderförmigen, an der Buchse 8a fixierten Aufbau und in ihrem unteren Bereich einen konusförmigen Aufbau; die Hülse 7 stützt sich auf der Oberfläche eines zu bearbeitenden Gegenstands über drei Füßchen 7a ab. Auf die Hülse 7 wird ein an die Form der Hülse 7 angepasstes Anschlussstück 3 (Fig. 5a, Fig. 5c) übergestülpt; über Rastelemente 3c ist das Anschlussstück 3 mit der Unterseite der Hülse 7 verrastet. In der Hülse 7 und in demAnschlussstück 3 sind Öffnungen vorhanden, durch die Luft durch die Absaugvorrichtung angesaugt wird.

Ein anderes Anschlussstück 3 (Fig. 6a, Fig. 6c) hat einen im Wesentlichen dreieckförmigen Grundriss. Es ist zum Aufsetzen auf eine Absaughülse 7 (Fig. 6b) mit einem entsprechenden dreieckförmigen Grundriss und drei Füßchen 7b vorgesehen. In diesem Fall wird beim Betrieb der Saugvorrichtung zwischen den Füßchen 7b auf der Unterseite des Anschlussstücks 3 Luft angesaugt, die die beim Senken oder Bohren entstehenden Materialpartikel mitreißt.

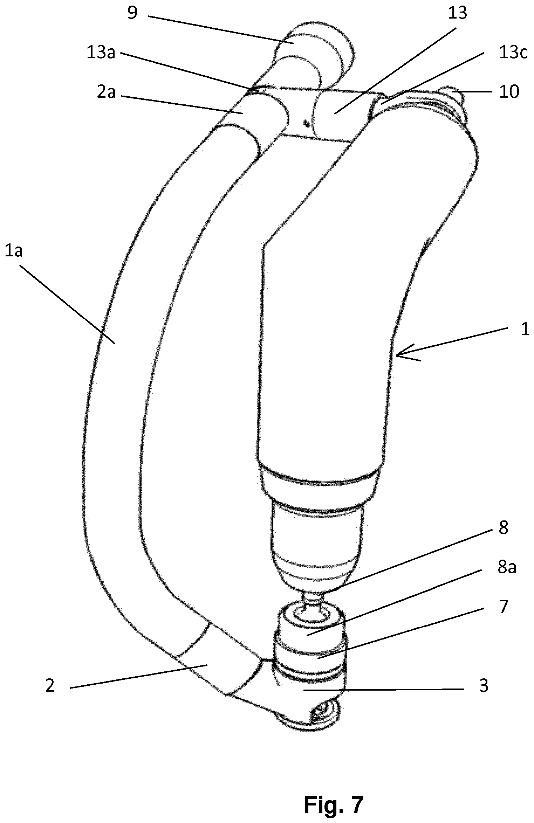

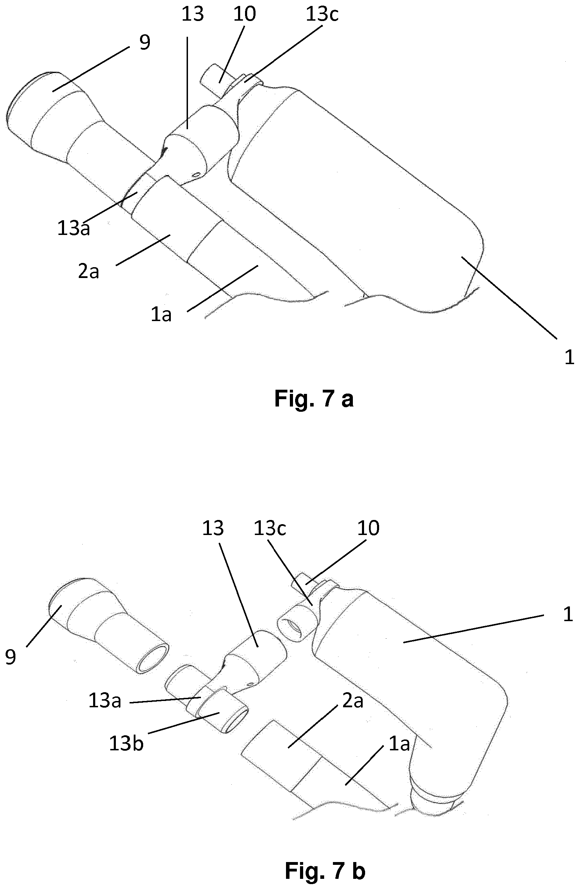

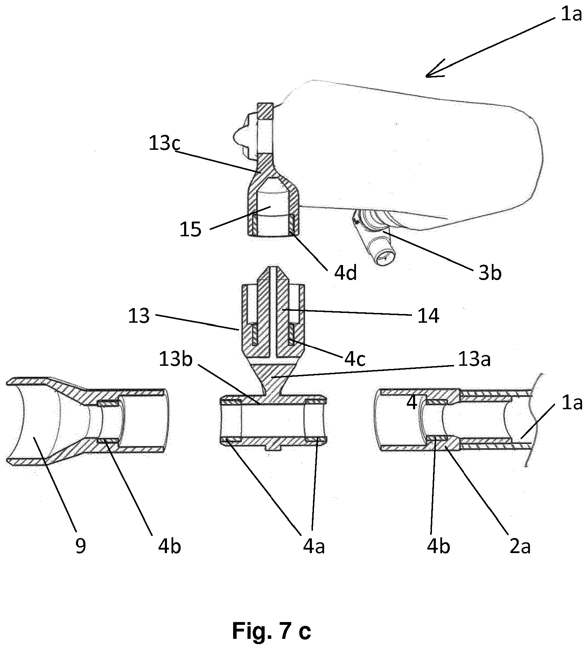

Um den Saugschlauch 1a gegenüber der Handwerkzeugmaschine 1 nicht nur an der dem zu bearbeitenden Material zugewandten Oberfläche mittels des Verbindungsstücks 2 zu fixieren, ist in einer Ausführungsform (Fig. 7, Fig. 7a, Fig. 7b, Fig. 7c) vorgesehen, dass der Saugschlauch 1a im Bereich des Adapters 9 an einem Anschlussstück 10 der Handwerkzeugmaschine 1 befestigt ist. Hierzu dient ein Verbindungselement 13, das einerseits an dem Anschlussstück 10 und andererseits über ein rohrförmiges Verbindungsstück 2a an dem Saugschlauch 1a befestigt ist.

Hierzu ist das Verbindungselement 13 über ein ösenförmiges Anschlusselement 13a mit einem Rohrstück 13b verbunden, auf das beidseitig das Verbindungsstück 2a bzw. der Adapter 9 aufgesteckt werden. Eine dauerhafte Verbindung kommt über in dem Rohrstück 13b angeordnete magnetische Ringe 4a zustande, wobei sowohl das Verbindungsstück 2a als auch der Adapter 9 auf ihrem Innenumfang jeweils ebenfalls mit einem magnetischen Ring 4b ausgestattet sind, welche jeweils durch die magnetischen Ringe 4a angezogen werden.

In entsprechender Weise ist das Verbindungselement 13 über ein auf dem Anschlussstück 10 aufgebrachtes Anschlusselement 13c mit der Handwerkzeugmaschine 1 verbunden. Hierzu dienen magnetische Ringe 4c und 4d. Um das Verbindungselement 13 leicht mit dem Anschlusselement 13c verbinden zu können, ist ein Führungszapfen 14 an dem Verbindungselement 13 vorgesehen, der in eine entsprechende Aufnahme 15 des Anschlusselements 13c hineingesteckt wird.

Die magnetischen Ringe 4 , 5 , 4a bis 4d sind mit den Teilen, in denen sie angeordnet sind, also beispielsweise dem Verbindungsstück 2 , integriert, insbesondere mit ihnen vergossen oder verklebt.

## Patentansprüche

1. Verwendung einer Schnellkupplung mit einem ersten Ring (4) aus einem dauermagnetischen Material, insbesondere aus einem magnetisierten Stahl oder aus einem Kunststoff mit permanentmagnetischen Eigenschaften, und mit einem dem ersten Ring (4) entsprechenden zweiten Ring (5), der durch magnetische Anziehung mit dem ersten Ring (4) verbindbar ist bei einem Anschlussstück (3) zum Anschließen an eine Handwerkzeugmaschine (1), insbesondere Handbohrmaschine, welche an eine Absaugvorrichtung zum Absaugen von Staub und Partikeln anschließbar ist, wobei das Anschlussstück (3) an einem vorderen Gehäuseteil der Handwerkzeugmaschine (1), dem zu bearbeitenden Gegenstand entgegen, an der Handwerkzeugmaschine (1) angebracht ist und wobei das Anschlussstück (3) einen seitlich der Längsachse der Handwerkzeugmaschine (1) angeordneten Anschlussstutzen (3b) mit einer Öffnung zur Verbindung mit der Absaugvorrichtung aufweist, wobei der Anschlussstutzen (3b) des Anschlussstücks (3) die Schnellkupplung aufweist oder mit dieser in Verbindung steht und die Absaugvorrichtung über die Schnellkupplung an den Anschlussstutzen (3b) anschließbar ist.

2. Verwendung nach Anspruch 1, **dadurch gekennzeichnet, dass** die Absaugvorrichtung einen Saugschlauch (1a), insbesondere einen elastisch auseinanderziehbaren Saugschlauch (1a), oder ein Rohr, insbesondere ein teleskopierbares Rohr, umfasst, an den bzw. an das die Schnellkupplung anschließbar ist.

3. Verwendung nach einem der voranstehenden Ansprüche, **dadurch gekennzeichnet, dass** die Absaugvorrichtung, insbesondere ein an ihr angeschlossener Saugschlauch (1a) oder ein an ihr angeschlossenes Rohr zur Verbindung mit dem Anschlussstück (3), mittels eines Verbindungsstücks (2) oder Anschlussstutzens (3b) gegenüber dem Körper der Handwerkzeugmaschine (1) fixierbar ist.

4. Verwendung nach einem der voranstehenden Ansprüche, **dadurch gekennzeichnet, dass** die Absaugvorrichtung unter einem Winkel von 90°, unter einem stumpfen Winkel oder einem spitzen Winkel gegenüber der Arbeitsrichtung der Handwerkzeugmaschine (1) angeordnet ist.

5. Verwendung nach einem der voranstehenden Ansprüche, **dadurch gekennzeichnet, dass** zwischen dem Anschlussstück (3) und dem vorderen Gehäuseteil der Handwerkzeugmaschine (1) ein Faltenbalg und/oder ein federndes Element als Verbindungselement vorgesehen ist.

6. Verwendung nach einem der voranstehenden Ansprüche, **dadurch gekennzeichnet, dass** das Anschlussstück (3) über wenigstens zwei teleskopartig miteinander bzw. mit dem Anschlussstutzen (3b) verbundene Muffen an die Handwerkzeugmaschine (1) angesetzt oder ansetzbar ist.

7. Verwendung nach einem der voranstehenden Ansprüche, **dadurch gekennzeichnet, dass** der Anschlussstutzen (3b) mit einem Kugelgelenk ausgestattet ist.

8. Verwendung nach einem der voranstehenden Ansprüche, **dadurch gekennzeichnet, dass** das Anschlussstück (3) drei, insbesondere elastisch gelagerte Füßchen (7a), insbesondere aus Gummi oder einem sonstigen elastischen Material, zum Aufsetzen auf die Kontur des zu bearbeitenden Materials aufweist oder über diese auf die Kontur des zu bearbeitenden Materials aufsetzbar ist.

## Claims

1. Use of a quick coupling having a first ring (4) made of a permanent-magnet material, in particular of a magnetised steel or of a plastic with permanent-magnet properties, and having a second ring (5) corresponding to the first ring (4) which is connectable to the first ring (4) by magnetic attraction in a connector (3) for connection to a hand-held power tool (1), in particular hand-held drill, which is connectable to a suction device for removing dust and particles by suction, wherein the connector (3) is attached to the hand-held power tool (1) on a front housing part of the hand-held power tool (1), opposite the object to be machined, and wherein the connector (3) has a connecting adapter (3b) arranged laterally of the longitudinal axis of the hand-held power tool (1) with an opening for connection with the suction device, wherein the connecting adapter (3b) of the connector (3) has the quick coupling or is connected to the latter and the suction device is connectable to the connecting adapter (3b) via the quick coupling.

2. Use according to claim 1, **characterised in that** the suction device comprises a suction tube (1a), in particular a suction tube (1a) which can be pulled apart elastically, or a tube, in particular a telescopic tube, on which or to which the quick coupling is connectable.

3. Use according to one of the preceding claims, **characterised in that** the suction device, in particular a suction tube (1a) connected to it or a tube connected to it for connection with the connector (3), is fixable by means of a connecting piece (2) or connecting adapter (3b) with respect to the body of the hand-held power tool (1).

4. Use according to one of the preceding claims, **characterised in that** the suction device is arranged at an angle of 90°, at an obtuse angle or an acute angle with respect to the working direction of the hand-held power tool (1).

5. Use according to one of the preceding claims, **characterised in that** an expansion joint and/or a resilient element as a connecting element is provided between the connector (3) and the front housing part of the hand-held power tool (1).

6. Use according to one of the preceding claims, **characterised in that** the connector (3) is attached or is attachable to the hand-held power tool (1) via at least two sleeves connected telescopically to one another or to the connecting adapter (3b).

7. Use according to one of the preceding claims, **characterised in that** the connecting adapter (3b) is equipped with a spherical joint.

8. Use according to one of the preceding claims, **characterised in that** the fitting (3) has three, in particular elastically mounted small feet (7a), in particular made of rubber or another elastic material, for placing on the contour of the material to be machined or is placeable onto the contour of the material to be machined via the latter.

## Revendications

1. Utilisation d'un couplage rapide avec une première bague (4) composée d'un matériau durablement magnétique, en particulier composée d'un acier magnétisé ou composée d'une matière plastique avec des propriétés magnétiques permanentes, et avec une deuxième bague (5) correspondant à la première bague (4), qui peut être reliée à la première bague (4) par attraction magnétique, dans une pièce de raccordement (3) destinée à être raccordée à une machine-outil à main (1), en particulier une perceuse à main, laquelle peut être raccordée à un dispositif d'évacuation par aspiration servant à évacuer par aspiration de la poussière et des particules, dans laquelle la pièce de raccordement (3) est installée sur une partie de boîtier avant de la machine-outil à main (1), à l'opposé de l'objet à usiner, sur la machine-outil à main (1) et dans laquelle la pièce de raccordement (3) présente une tubulure de raccordement (3b) disposée à côté de l'axe longitudinal de la machine-outil à main (1), avec une ouverture destinée à être reliée au dispositif d'évacuation par aspiration, dans laquelle la tubulure de raccordement (3b) de la pièce de raccordement (3) présente le couplage rapide ou est reliée à celui-ci et le dispositif d'évacuation par aspiration peut être raccordé à la tubulure de raccordement (3b) par l'intermédiaire du couplage rapide.

2. Utilisation selon la revendication 1, **caractérisée en ce que** le dispositif d'évacuation par aspiration comprend un tuyau flexible d'aspiration (1a), en particulier un tuyau flexible d'aspiration (1a) extensible de manière élastique, ou un tube, en particulier un tube télescopique, auquel le couplage rapide peut être raccordé.

3. Utilisation selon l'une quelconque des revendications précédentes, **caractérisée en ce que** le dispositif d'évacuation par aspiration, en particulier un tuyau flexible d'aspiration (1a) raccordé à celui-ci ou un tube raccordé à celui-ci, destiné à être relié à la pièce de raccordement (3) peut être bloqué au moyen d'une pièce de liaison (2) ou d'une tubulure de raccordement (3b) par rapport au corps de la machine-outil à main (1).

4. Utilisation selon l'une quelconque des revendications précédentes, **caractérisée en ce que** le dispositif d'évacuation par aspiration est disposé selon un angle de 90°, selon un angle obtus ou selon un angle aigu par rapport à la direction de travail de la machine-outil à main (1).

5. Utilisation selon l'une quelconque des revendications précédentes, **caractérisée en ce qu'**un soufflet et/ou un élément sur ressorts sont prévus en tant qu'élément de liaison entre la pièce de raccordement (3) et la partie de boîtier avant de la machine-outil à main (1).

6. Utilisation selon l'une quelconque des revendications précédentes, **caractérisée en ce que** la pièce de raccordement (3) est placée ou peut être placée sur la machine-outil à main (1) par l'intermédiaire d'au moins deux manchons reliés l'un à l'autre ou à la tubulure de raccordement (3b) de manière télescopique.

7. Utilisation selon l'une quelconque des revendications précédentes, **caractérisée en ce que** la tubulure de raccordement (3b) est équipée d'un joint à rotule.

8. Utilisation selon l'une quelconque des revendications précédentes, **caractérisée en ce que** la pièce de raccordement (3) présente trois petits pieds (7a) montés en particulier de manière élastique, en particulier composés de caoutchouc ou de tout autre matériau élastique, destinés à être placés sur le contour du matériau à usiner ou peut être placée par l'intermédiaire de ceux-ci sur le contour du matériau à usiner.
